(19) Europäisches Patentamt
European Patent Office
Office européen des brevets

(11) Numéro de publication: **0 319 384**
**A2**

(12) **DEMANDE DE BREVET EUROPEEN**

(21) Numéro de dépôt: **88402985.1**

(22) Date de dépôt: **28.11.88**

(51) Int. Cl.4: **C 07 F 7/08**
C 08 G 77/32

(30) Priorité: **03.12.87 US 128245**

(43) Date de publication de la demande:
**07.06.89 Bulletin 89/23**

(84) Etats contractants désignés:
**AT BE CH DE FR GB IT LI NL SE**

(71) Demandeur: **RHONE-POULENC CHIMIE**
**25, quai Paul Doumer**
**F-92408 Courbevoie Cédex (FR)**

(72) Inventeur: **Gradeff, Peter S.**
**Black River Road**
**Pottersville N.J. 07979 (US)**

**Yulu, Kenan**
**50 Robinson Street**
**New Brunswick N.J. 08901 (US)**

(74) Mandataire: **Dutruc-Rosset, Marie-Claude et al**
**RHONE-POULENC INTERSERVICES Service Brevets**
**Chimie 25, Quai Paul Doumer**
**F-92408 Courbevoie Cédex (FR)**

(54) **Hydrocarbylsilyloxydes cériques et leur procédé de fabrication.**

(57) L'invention a pour objet la fabrication d'hydrocarbylsilyloxydes cériques.

Selon l'invention, on fait réagir le nitrate cérique d'ammonium, avec un hydrocarbylsilanol en conditions anhydres en présence d'une base anhydre et à une température dans la gamme d'environ -30 à environ 200°C jusqu'à formation de l'hydrocarbylsilyloxyde de cérium et du nitrate de la base.

Applications

Fabrication de poudres d'oxydes de cérium et de silicium pour la préparation de céramiques à hautes performances, de gels durs et de films contenant du cérium et du silicium ; de fibres optiques contenant des polymères ou oxydes de cérium et de silicium, d'additifs pour biocides, d'additifs pour revêtements de silicones comme les peintures, le traitement de textiles et d'autres matières cellulosiques ; diverses applications catalytiques, par exemple pour vulcaniser le caoutchouc de silicone et pour la fabrication de polyuréthannes.

EP 0 319 384 A2

Bundesdruckerei Berlin

**Description**

**Hydrocarbylsilyloxides cériques et leur procédé de fabrication.**

La présente invention a trait à des hydrocarbylsilyloxydes cériques et leur procédé de fabrication.

Les alcoxydes ou alcoolates de métaux polyvalents constituent une classe importante de composés organométalliques à usages multiples dans de nombreuses utilisations industrielles. Dans certains cas, leurs utilisations vont en parallèle avec les carboxylates métalliques et d'autres composés organométalliques, mais ils ont des avantages sur ces composés à cause de leurs propriétés catalytiques, de leur facilité d'hydrolyse, de leur solubilité dans les solvants organiques et de leur volatilité. On les a utilisés comme additifs aux peintures, hydrofugeants, activeurs d'adhérence, mordants, agents d'apprêt dans les compositions d'émaux, catalyseurs et également comme intermédiaires très importants dans la synthèse d'autres composés organiques.

Il existe quatre méthodes générales de préparation des alcoolates métalliques, toutes en conditions anhydres, qui sont les suivantes :

**A** - Par réaction de l'alcool correspondant et d'un métal tel que les métaux alcalins, les métaux alcalino-terreux et l'aluminium, avec l'aide d'un catalyseur alcalin ou acide.

**B** - Par réaction de l'alcool correspondant avec les oxydes et hydroxydes des métaux, par exemple NaOH ou $Na_2O$, $V_2O_5$ et $MoO_3,8H_2O$.

**C** - Par réaction de l'alcool correspondant et de l'halogénure métallique en présence d'une base anhydre. Un exemple typique est la préparation de $Th(OR)_4$ ou $Zr(OR)_4$ :

$$ThCl_4 + 4ROH + 4NaOR \rightarrow Th(OR)_4 + 4NaCl$$
$$ZrCl_4 + 4ROH + 4NH_3 \rightarrow Zr(OR)_4 + 4NH_4Cl$$

La réaction peut être utilisée pour préparer des alcoolates de titane, hafnium, germanium, niobium, tantale, aluminium et étain.

**D** - Par transéthérification des alcoolates métalliques d'alcools inférieurs comme les méthylates, éthylates ou isopropylates avec un alcool supérieur.

La méthode A est illustrée par un certain nombre d'alcoolates d'yttrium, de lanthane et d'autres lanthanides par L. Brown et K. Mazdiyasni dans Inorganic Chemistry (1970), p. 2783. La réaction, que l'on croyait antérieurement n'être utile que pour les métaux alcalins, le magnésium et l'aluminium a été étendue par eux à la synthèse des isopropylates d'yttrium et de tous les lanthanides.

Pour les lanthanides inférieurs tels que lanthane, cérium, praséodyme et néodyme, on utilise comme catalyseur un mélange de $HgCl_2$ et $Hg(C_2H_3O_2)_2$ ou $HgI_2$ pour augmenter à la fois la vitesse de réaction et le rendement. En général, on fait réagir 5 g de tournures du métal avec environ 300 ml d'alcool isopropylique à la température de reflux pendant environ 24 heures et en présence d'une faible quantité du sel de Hg catalyseur. Les auteurs disent que les rendements dont de 75 % ou mieux.

La plupart des autres exemples dans la littérature de la préparation d'alcoolates de lanthanides concernent l'utilisation des halogénures métalliques correspondants. Dans certains cas, on préfère un complexe $LaCl_3.3ROH$ ou chlorure $Lacl_3$ (Misra et autres Austr. J. Chem. 21, p. 797 (1978), et Mehrotra et Batwara Inorganic Chem. 9, p. 2505 (1970).

Une variante intéressante de la méthode D est mentionnée par Tripathi, Batwara et Mehrotra J.C.S.A. 1967, p. 991. Les alcoolates inférieurs d'ytterbium (tels que méthylate et éthylate) ont été synthétisés à partir de l'isopropylate d'ytterbium, par transéthérification par le méthanol ou l'éthanol. En raison de leur faible solubilité, ces alcoolates sont séparés par précipitation au cours de la réaction au cours de la réaction déplaçant l'équilibre de réaction jusqu'à la transéthérification complète.

En général, les méthodes A, B et C ne conviennent que pour la préparation des alcoolates inférieurs, tels que méthylates, éthylates et isopropylates, puisque la réactivité des alcools supérieurs diminue lorsque leurs poids moléculaires augmentent. Les alcoolates supérieurs sont mieux préparés par la méthode D qui est un procédé en deux étapes.

La seule méthode publiée pour préparer les alcoolates cériques appliquait la méthode C au chlorure cérique, Bradley et autres, J.C.S.1956, p. 2260-2264. Comme le tétrachlorure de cérium est instable, Bradley et autres avaient choisi comme produit de départ le complexe hexachlorure et dipyridinium-cérium.

Le dioxyde de cérium était d'abord transformé en sulfate cérique d'ammonium. L'hydroxyde cérique pur était précipité à partir d'une solution aqueuse de sulfate cérique d'ammonium et lavé à fond. L'hydroxyde cérique fraîchement préparé, en suspension dans l'alcool absolu, était traité par le chlorure d'hydrogène anhydre et ensuite on ajoutait de la pyridine, qui formait le complexe hexachlorure de dipyridinium-cérium insoluble $(Py)_2CeCl_6$. Le complexe était filtré, séché et utilisé pour préparer directement le méthylate, l'éthylate et l'isopropylate, tandis que les alcoolates correspondant aux groupes propyle, butyle, sec.-butyle, néopentyle et n-pentyle étaient préparés par échange d'alcools, c'est-à-dire transéthérification, à partir de l'isopropylate. Le méthylate et l'éthylate étaient également préparés par échange à partir de l'isopropylate.

Gradeff et Schreiber, dans les brevets des Etats-Unis d'Amérique n° 4 489 900 délivré le 18 décembre 1984 et n° 4 663 439 délivré le 5 mai 1987, proposent un procédé pour préparer les alcoolates cériques qui consiste à faire réagir le nitrate cérique d'ammonium avec un alcool en conditions anhydres en présence d'une base

anhydre à une température dans la gamme d'environ -30 à environ 200° C, de préférence d'environ 0 à environ 150° C, jusqu'à ce que l'alcoolate cérique et le nitrate de la base soient formés.

Ce procédé évite la nécessité décrite par Bradley et autres de préparer d'abord l'hydroxyde cérique à partir du sel cérique, dans ce cas le sulfate cérique d'ammonium, et de transformer ensuite l'hydroxyde en chlorure, qu'il faut stabiliser sous forme de complexe de pyridine.

Il est assez surprenant, malgré l'importance considérable des travaux sur la préparation de composés siliciés de métaux des terres rares, que les hydrocarbylsilyloxydes de cérium soient inconnus, ainsi qu'un procédé convenable pour les préparer.

Bradley et Thomas ont indiqué dans J. Chem. Soc. 1959, p.3404 un travail sur les dérivés alkylsilyloxy de titane, zirconium, niobium et tantale, utilisant la triméthylsilanolyse d'isopropylates de titane ou de zirconium, ou utilisant l'acétate de trialkylsilyle à la place du silanol, mais il n'y a pas de référence au cérium.

Bradley et Prévedorou-Demas ont rapporté dans J. Chem. Soc. 1964, p. 1580 un autre travail sur les polymères de triméthylsiloxyde-oxyde de zirconium.

Aucun de ces articles ne fait référence à des silyloxydes de cérium.

Selon la présente invention, on propose un procédé pour préparer des hydrocarbylsilyloxydes cériques, qui consiste à faire réagir le nitrate cérique (ou hexanitratocérate IV) d'ammonium $(NH_4)_2Ce(NO_3)_6$ avec un silanol en conditions anhydres en présence d'une base anhydre à une température dans la gamme d'environ -30 à environ 200° C, de préférence d'environ 0 à environ 150° C, jusqu'à ce que l'hydrocarbylsilyloxyde cérique et le nitrate de la base soient formés.

Ce procédé est direct et économique et utilise en outre le nitrate cérique d'ammonium, produit relativement peu coûteux, qui est disponible dans le commerce.

On pense que le produit, un hydrocarbylsilyloxyde cérique, est nouveau puisqu'il n'a pas été indiqué précédemment dans la littérature et il est caractérisé par un ou plusieurs groupes ayant un cérium tétravalent relié par l'oxygène à 1, 2, 3 ou 4 atomes de silicium, comme indiqué, les trois ou deux valences restantes du silicium, respectivement, étant reliées à des groupes hydrocarbonés ayant de 1 à 20 atomes de carbone. Les composés peuvent avoir 1, 2, 3 ou 4 atomes de silicium, dans une seule unité ou dans plusieurs de ces unités, reliées en oligomères ou polymères linéaires, ramifiés ou du type cage, lorsque le silanol de départ est un diol.

En outre, si on le désire, un hydrocarbylsilyloxyde-nitrate cérique est formé lorsque la quantité de silanol est inférieure à la quantité stoechiométrique nécessaire pour la réaction avec toutes les positions de valence du cérium, et peut être isolé du mélange de réaction. Ces positions de valence libres du cérium portent donc des groupes $NO_3$ au lieu de groupes silyloxydes.

Un hydrocarbyloxyde-hydrocarbylsilyloxyde cérique peut être formé par transéthérification d'un hydrocarbyloxyde cérique avec le silanol et utilisation d'une quantité de silanol qui est inférieure à la quantité stoechiométrique nécessaire pour la réaction avec toutes les positions de valence du cérium, de sorte qu'une partie seulement des groupes hydrocarbyloxydes sont déplacés par des groupes silyloxydes. Ces positions de valence du cérium portent donc des groupes hydrocarbyloxydes.

En conséquence, pour préparer un hydrocarbyloxyde-hydrocarbylsilyloxyde cérique, un alcoolate cérique est transéthérifié par le silanol ayant le groupe hydrocarboné désiré et le nombre désiré de groupes hydroxyles en conditions anhydres à une température dans la gamme d'environ -30 à environ 200° C en déplaçant ainsi une partie de l'alcool le plus souvent aliphatique de l'alcoolate et en formant l'hydrocarbyloxyde-hydrocarbylsilyloxyde cérique du silanol. L'hydrocarbyloxyde-hydrocarbylsilyloxyde cérique précipite au cours de la transéthérification s'il est insoluble dans le mélange de réaction.

En conséquence, les hydrocarbylsilyloxydes cériques peuvent être définis par la formule générale suivante :

I

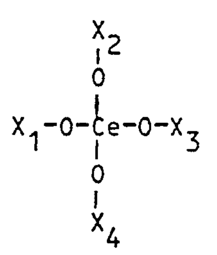

dans laquelle $OX_1$, $OX_2$, $OX_3$ et $OX_4$ identiques ou différents sont choisis parmi

a) $-O-NO_2$,

b) $-O-R_1$ où $R_1$ est un groupe hydrocarboné ayant de 1 à environ 20 atomes de carbone,

c) $-[O]_{4-y}$ $Si-R_y$ où R est H ou un radical hydrocarboné ayant de 1 à environ 20 atomes de carbone, avec la limitation qu'au plus 1 atome d'hydrogène est lié au silicium et y est un nombre entier égal à 1, 2 ou 3.

Lorsque y est supérieur à 1, les radicaux R peuvent être identiques ou différents.

Lorsque y est égal à 1 ou 2, l'atome de silicium peut être relié par l'intermédiaire de 1 ou 2 atomes d'oxygène à un même atome de cérium ou à 2 atomes de cérium différents ; de même, l'un desdits

atomes d'oxygène au moins peut être lié à un autre atome de silicium qui appartient à un autre radical de type c) porté par le même atome de cérium ou par un autre atome de cérium.

d) 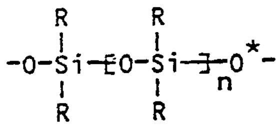

où R est un radical hydrocarboné comportant de 1 à environ 20 atomes de carbone, n est le nombre de motifs dans le polymère et est compris entre 1 et environ 1 000 et l'oxygène -O*- est lié à un atome d'hydrogène ou est lié à un atome de cérium, avec la condition complémentaire qu'au moins un des groupes $OX_1$, $OX_2$, $OX_3$ et $OX_4$ appartient à l'une des catégories c) et d).

Des exemples de composés représentés par la formule I, selon la valeur de $X_1$, $X_2$, $X_3$, $X_4$, sont les composés suivants :

1- 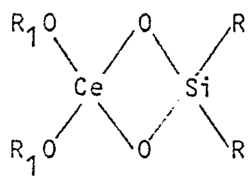

2- 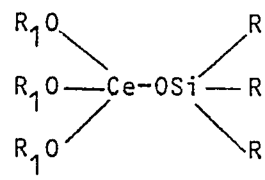

3- 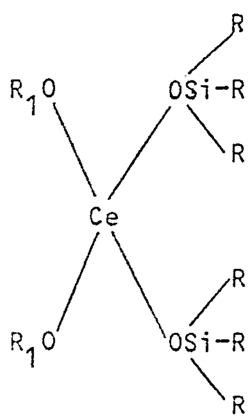

4- 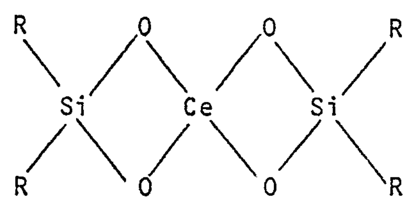

5-

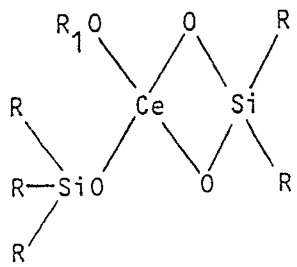

6-

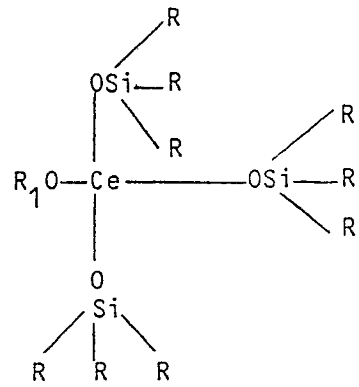

7-

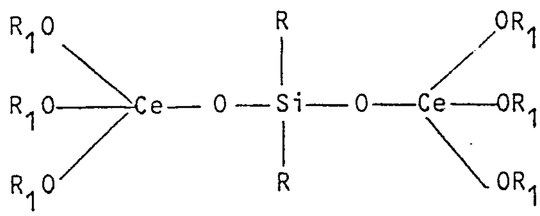

8-

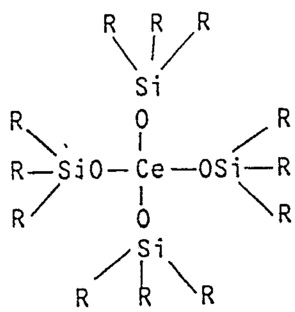

9-

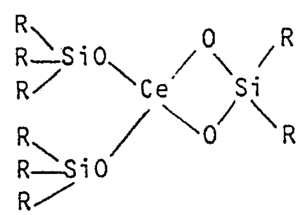

10-

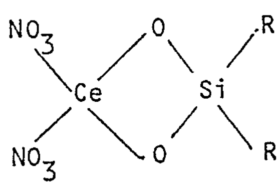

11-

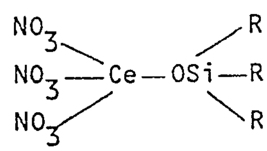

12-

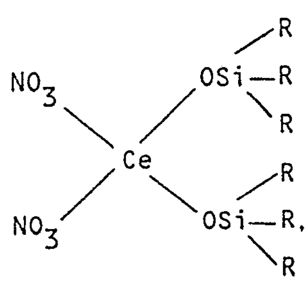

13-

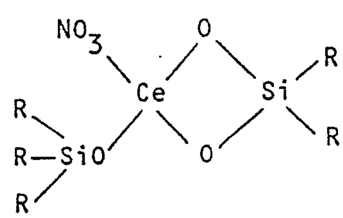

14- 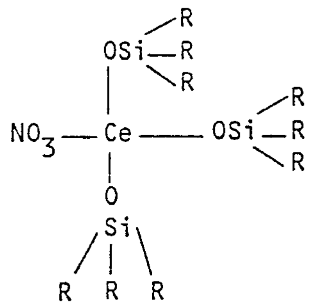

15- 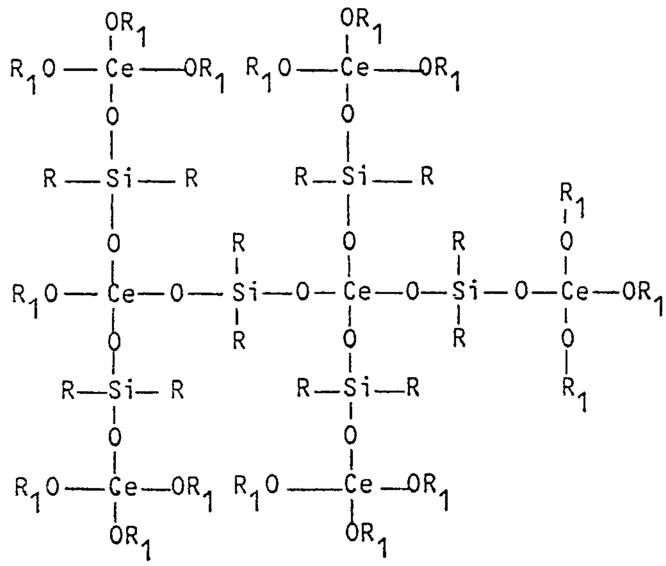

16- 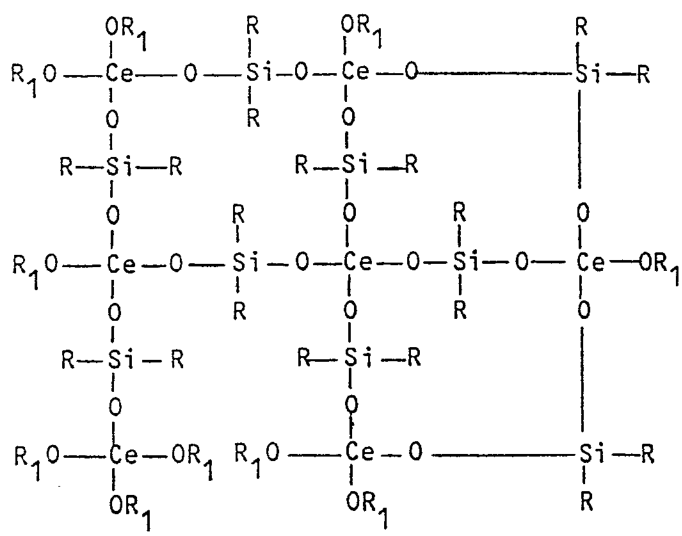

17- 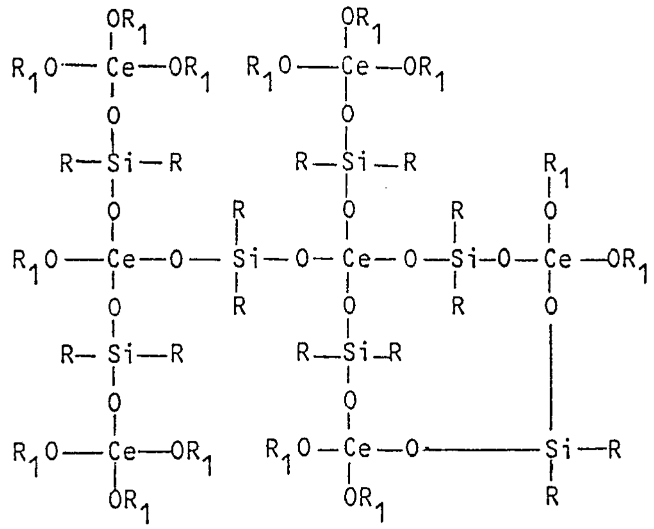

18- 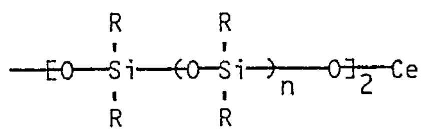

Le composé (18) peut être considéré comme un motif d'une structure polymérique dans laquelle n peut varier entre 0 et 1 000.

Dans les formules ci-dessus, R est un groupe hydrocarboné ayant de 1 à environ 10 atomes de carbone, et les restes R liés à un atome de silicium quelconque peuvent être identiques ou différents.

$R_1$ est un groupe hydrocarboné relié au cérium par l'oxygène et ayant de 1 à environ 10 atomes de carbone, et les restes $R_1$ liés à un atome de cérium quelconque peuvent être identiques ou différents.

Des exemples de groupes hydrocarbonés R et $R_1$ intervenant dans l'hydrocarbylsilyloxyde cérique de formule (I) comprennent les groupes alkyles, alcényles à chaînes droites ou ramifiés, cycloalkyles, cycloalcényles, phényle et alkylphényles, naphtyles et alkylnaphtyles.

Des groupes hydrocarbonés R et $R_1$ ayant de 1 à environ 10 atomes de carbone sont préférés.

Des exemples de restes alkyles R et $R_1$ comprennent les groupes méthyle, éthyle, propyle, isopropyle, butyle, sec-butyle, hexyle, octyle, isooctyle, ethyl-2-hexyle, nonyle et décyle.

Des exemples de restes alcényles R et $R_1$ comprennent les groupes vinyle, allyle, butényle, hexényle, octényle, nonényle et décényle.

Des exemples de cycloalkyles et cycloalcényles R et $R_1$ sont les groupes cyclopentyle, cyclohexyle, cycloheptyle et cyclooctyle, cyclopentényle, cyclohexényle et cycloheptényle.

Des exemples de restes alkylaryles R et $R_1$ sont les groupes phényle, phénylméthyle et phényléthyles.

Dans la liste des groupes précités R et $R_1$, ceux qui sont préférés, sont choisis parmi les groupes alkyles linéaires ou ramifiés ayant de 1 à 5 atomes de carbone, le groupe vinyle, le groupe cyclohexyle et le groupe phényle.

Conformément à la présente invention, on obtient les hydrocarbylsilyloxydes cériques de formule (I), en faisant réagir le nitrate cérique d'ammonium avec un hydrocarbylsilanol, en présence d'une base.

Les hydrocarbylsilanols peuvent répondre à l'une quelconque des formules suivantes :

a) 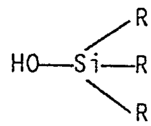 (II)

b) 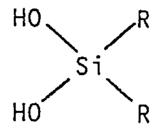 (III)

c) 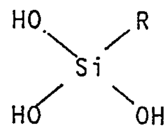 (IV)

d) 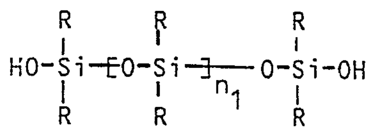 (V)

Dans les formules données ci-dessus, R a la signification donnée précédemment et $n_1$ est le nombre de motifs du polymère et peut varier donc de 0 à environ 1 000.

Le groupe d) comprend des résines silicones solides contenant des groupes OH libres, qui peuvent être solubilisées et utilisées dans la réaction avec le nitrate cérique d'ammonium pour former une résine silicone liée au cérium par l'oxygène.

R est l'hydrogène ou le groupe hydrocarboné désiré dans le produit silyloxyde et les restes R fixés à n'importe quel atome de silicium peuvent être identiques ou différents.

Des sous-classes préférées de silanols comprennent :

(i) 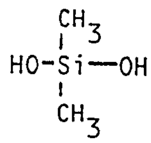 (ii) 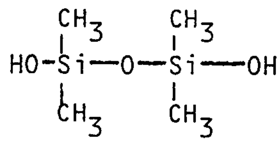 (iii) 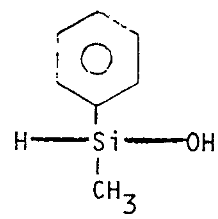

(iv) 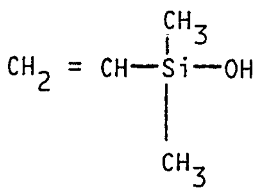 (v) $HO-Si(R_2)_3$ $R_2$ = méthyle, éthyle, phényle

(vi) 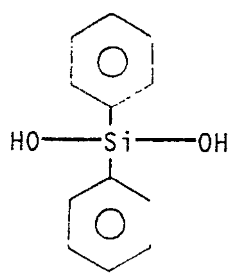 (vii) 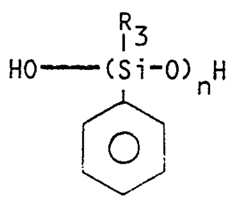 n = 4, $R_3$ = groupe hydrocarboné en $C_1$-$C_6$

(viii) 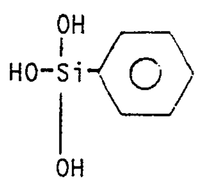 (ix) 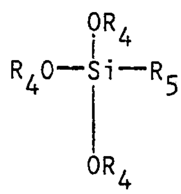 $R_4$ = méthyle, éthyle, propyle, butyle, isopropyle.
$R_5$ = méthyle, éthyle, vinyle, phényle.

Le procédé se déroule facilement avec les silanols, les silanediols et les silanetriols aliphatiques ayant 1, 2 ou 3 groupes hydrocarbonés en $C_1$-$C_5$, par exemple triméthylsilanol, triéthylsilanol, tripropylsilanol, triisopropylsilanol, tributyl silanol, triisobutylsilanol, tri-(sec-butyl)silanol, tri-(tert-butyl)silanol, tripentylsilanol, triisopentylsilanol, tri-(sec-pentyl)silanol, tri-(tert-pentyl)silanol ; diméthylsilanediol, diéthylsilanediol, dipropylsilanediol, diisopropylsilanediol, dibutylsilanediol, diisobutylsilanediol, di-(sec-butyl)silanediol, di-(tert-butyl)silanediol, dipentylsilanediol, diisopentylsilanediol, di-(sec-pentyl)silanediol, di-(tert-pentyl)silanediol ; méthylsilanetriol, éthylsilanetriol, propylsilanetriol, isopropylsilanetriol, butylsilanetriol, isobutylsilanetriol, sec-butyl-silanetriol, tert-butyl-silanetriol, pentylsilanetriol, isopentylsilanetriol, sec-pentyl-silanetriol, tert-pentylsilanetriol.

On peut incorporer directement dans le mélange de réaction un hydrocarbylsilanol aliphatique supérieur, cycloaliphatique ou aromatique, contenant des groupes hydrocarbonés ayant au moins 6 jusqu'à environ 20 atomes de carbone en mélange avec un silanol aliphatique inférieur contenant des groupes hydrocarbonés en $C_1$-$C_5$ pour former un silyloxyde cérique du silanol supérieur. On citera à titre d'exemples les suivants : trihexylsilanol, triheptylsilanol, triisoheptylsilanol, trioctylsilanol, triisooctylsilanol, tri-(éthyl-2-hexyl)-silanol, tri-(sec-octyl)-silanol, tri-(tertoctyl)-silanol, trinonylsilanol, triisononylsilanol, tridécylsilanol, tridodécylsilanol, tritétradécylsilanol, trioctadécylsilanol, trihexadécylsilanol, trioléylsilanol et trieicosylsilanol ; dihexylsilanediol, diheptylsilanediol, diisoheptylsilanediol, dioctylsilanediol, diisooctylsilanediol, di-(éthyl-2-hexyl)-silanediol, di-(sec-octyl)-silanediol, di-(tert-octyl)-silanediol, dinonylsilanediol, diisononylsilanediol, di-décylsilanediol ; hexylsilanetriol, heptylsilanetrio, isoheptylsilanetriol, octylsilanetriol, isooctylsilanetriol, 2-éthyl-hexyl-silanetriol, sec-octylsilanetriol, tert-octylsilanetriol, nonylsilanetriol, isononylsilanetriol, décylsilanetriol, ou un silanolcycloaliphatique ayant de 3 à environ 20 atomes de carbone, comme par exemple tricyclopropylsilanol, tricyclobutylsilanol, tricyclopentylsilanol, tricyclohexylsilanol, tricycloheptylsilanol, tricyclooctylsilanol, tricyclododécylsilanol, tripropylcyclohexylsilanol, triméthylcyclohexylsilanol et triméthylcycloheptylsilanol ; dicyclopropylsilanediol, dicyclobutylsilanediol, dicyclo pentylsilanediol, dicyclohexylsilanediol, dicycloheptylsilanediol,

dicyclooctylsilanediol, dipropylcyclohexylsilanediol, diméthylcyclohexylsilanediol et diméthylcycloheptylsilanediol ; cyclopropylsilanetriol, cyclobutylsilanetriol, cyclopentylsilanetriol, cyclohexylsilanetriol, cycloheptylsilanetriol, cyclooctylsilanetriol, propylcyclohexylsilanetriol, méthylcyclohexylsilanetriol et méthylcyclohexylsilanetriol et méthylcycloheptylsilanetriol ; un silanol aromatique ou alkylaromatique ayant de 6 à environ 20 atomes de carbone, comme par exemple triphénylsilanol, tribenzylsilanol, triphénéthylsilanol, triphénylpropylsilanol, triphényloctadécylsilanol et trinaphtyldécylsilanol ; diphénylsilanediol, dibenzylsilanediol, diphénétylsilanediol, diphénylpropylsilanediol ; phénylsilanetriol, benzylsilanetriol, phénéthylsilanetriol, phénylpropylsilanetriol, naphtylsilanetriol (lorsque les triols sont trop instables, on les utilise sous la forme de leurs éthers).

Le produit de réaction final est l'hydrocarbylsilyloxyde cérique du silanol supérieur, mais on pense que le silanol inférieur facilite la réaction en formant d'abord un silyloxyde de cérium, ce silyloxyde étant transformé par transéthérification avec le silanol supérieur en le silyloxyde du silanol supérieur.

Les réactions décrites ci-dessus peuvent être mises en oeuvre en présence d'un excès du silanol, qui peut aussi être un solvant du silyloxyde correspondant. Outre le réactif silanol, des solvants inertes tels que DME ou autres éthers méthyliques de glycols (notamment le diglyme), THF ou alcools, peuvent être nécessaires pour dissoudre le nitrate cérique d'ammonium. Des solvants inertes peuvent aussi être nécessaires pour séparer les produits des nitrates formés comme sous-produits, par exemple, pentane, benzène, toluène, essences minérales etc... Si on le désire, le solvant peut être séparé du produit de réaction par distillation sous pression atmosphérique ou sous pression réduite, après la fin de la réaction. Il est entendu qu'une ou deux molécules d'un solvant tel que le DME, par exemple, peuvent rester liées au cérium par coordination.

La réaction se déroule en conditions anhydres à une température dans la gamme d'environ -30 à environ 200 °C, de préférence d'environ 0 à environ 50° C, mieux encore à la température ambiante (le plus souvent entre 15 et 25° C) suivant le système solvant et la base utilisés.

Le cas, dans lequel le nitrate cérique d'ammonium est totalement ou partiellement dissous dans un alcool tel que méthanol, éthanol ou isopropanol, ou dans lequel le silanol est mélangé avec un alcool et ensuite ajouté au nitrate cérique d'ammonium, est un cas particulier qui peut comporter le passage "in situ" par l'alcoolate de cérium correspondant à l'alcool présent. Dans certains de ces cas, la réaction peut prendre plus longtemps pour être complète, et peut nécessiter un chauffage. Chaque fois, cependant, le produit est le silyloxyde de cérium désiré.

La réaction du nitrate cérique d'ammonium se déroule en présence d'une base anhydre convenable telle qu'ammoniac ou un métal alcalin que l'on a d'abord fait réagir avec le silanol pour produire le silanolate de métal alcalin correspondant, que l'on fait ensuite réagir avec le nitrate cérique d'ammonium. Un sous-produit de la réaction est le nitrate d'ammonium ou de métal alcalin correspondant.

La durée de réaction n'est pas critique. La réaction est poursuivie jusqu'à ce que le silyloxyde désiré soit formé. Ceci peut prendre de dix minutes à quelques heures, mais il n'est pas nécessaire de mettre en ouvre la réaction au-delà d'une durée de 5 heures. Ordinairement, la réaction est terminée en une à trois heures.

La réaction peut se dérouler rapidement à la température ambiante et, si c'est le cas, elle aura très vraisemblablement lieu aussi à des températures bien au-dessous de la température ambiante, jusqu'à -30° C, mais il n'y a pas de raison de mettre en jeu des frais supplémentaires de refroidissement du mélange de réaction. La limite supérieure de la température de réaction est imposée par la volatilité du mélange de réaction ou de l'un quelconque de ses composants et leurs températures de décomposition. Il n'y a pas de raison d'utiliser une température supérieure au point d'ébullition du mélange de réaction sous la pression atmosphérique, mais si la température d'ébullition est trop basse, par exemple dans le cas du méthanol, on peut utiliser un réacteur fermé ou un système de réaction sous pression. Compte tenu des facteurs ci-dessus, il n'est pas nécessaire que la température de réaction dépasse 200° C.

La quantité de la base anhydre est la quantité stoechiométrique, puisque la fonction du cation de la base, ammoniac ou métal alcalin, est de fixer l'anion nitrate du nitrate cérique d'ammonium de départ. On peut utiliser un excès, mais il est inutile.

La quantité de silanol est d'au moins 1 à 6 moles par mole de nitrate cérique d'ammonium, mais on peut aussi utiliser de plus grandes quantités. On utilisera bien entendu des quantité plus que stoechiométriques lorsque le silanol doit également agir comme solvant, suivant la dilution du mélange de réaction nécessaire.

Le mélange de réaction contient le nitrate du cation de la base, et celui-ci peut être séparé du silyloxyde pendant le traitement. Si ce sel est moins soluble dans le mélange de réaction que le produit de réaction, le silyloxyde, il peut être séparé par filtration du produit de réaction. Ou bien encore, le mélange de réaction peut être repris dans un solvant inerte, tel que benzène, DME, THF, toluène ou hexane, de préférence un solvant inerte dans lequel le produit de réaction, le silyloxyde, est soluble et le nitrate sel est insoluble, après quoi le nitrate sel est séparé par filtration ou centrifugation.

Suivant les conditions de réaction et de traitement, le silyloxyde peut être isolé sous forme d'associations avec une ou plusieurs molécules d'alcool ou d'un solvant.

Pour certaines application, les silyloxydes de cérium peuvent être utilisées sous la forme dans laquelle ils existent dans le mélange de réaction à la fin de la réaction, sans réellement les isoler du mélange de réaction, ou en les séparant des nitrates, ce qui économise des frais de traitement et de manipulation.

Selon les inventeurs, les exemples suivants représentent des modes de mise en oeuvre préférés de l'invention :

Exemple 1

Préparation du tétra(triphénylsilyloxyde) de cérium (VI)

$$(NH_4)_2\,Ce(NO_3)_6 + 4Ph_3SiOH + 4NH_3 \xrightarrow{DME} Ce(OSiPh_3)_4 + 6NH_4NO_3$$

On met en suspension 4 g (0,00729 mol) de nitrate cérique d'ammonium dans 40 ml (35 g) de diméthoxyéthane. Par addition de 8 g (0,0291 mol) de triphénylsilanol sous forme solide, il se forme une solution orangée presque limpide. Dans les cinq minutes suivantes, on fait barboter du gaz $NH_3$ dans la solution, ce qui provoque une réaction exothermique (le refroidissement n'est pas nécessaire) en même temps que la formation immédiate d'un précipité blanc. Après agitation pendant encore 10 minutes, le précipité est isolé en utilisant un filtre de verre fritté. Ensuite, en évaporant à siccité le filtrat jaune obtenu, on obtient un produit huileux qui, cependant, devient pulvérulent quand on le sèche encore sous vide (1mmHg). Le produit final est une poudre blanche, assez stable à l'air.

Rendement 8,5 g (94%).

Solubilité : bien soluble dans le toluène, soluble dans le DME, moyennement soluble dans l'acétone ; insoluble dans le n-hexane.

Spectre de RMN de $^1H$, $CHCl_3$-d, $\delta$ : 3,15 ; 3,35 ; 7,06 ; 7,14 ; 7,18 ; 7,26 ; 7,53 ; 7,61.

Spectre de RMN de $^{13}C$, $CHCl_3$-d, $\delta$ : 59,83 ; 71,79 ; 127,49 ; 129,17 ; 135,13 ; 137,57.

Exemple 2

Préparation du bis(1,1-diphénylsilyloxyde) de cérium (IV)

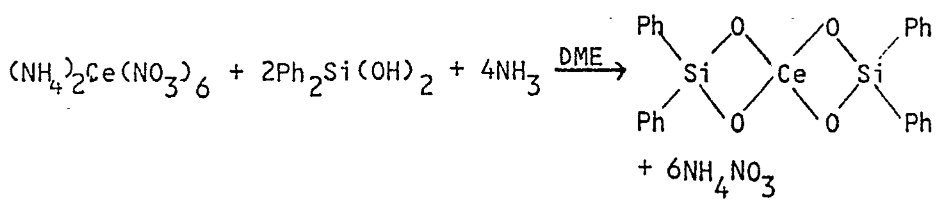


A une suspension agitée de 5 g (0,00912 mol) de $(NH_4)_2Ce(NO_3)_6$ dans 40 ml (35 g) de diméthoxyéthane, on ajoute 3,94 g (0,0182 mol) de $Ph_2Si(OH)_2$ sous forme solide, ce qui forme une solution rouge/orangée presque limpide. Le barbotage de gaz $NH_3$ dans la solution provoque une réaction exothermique et la formation immédiate d'un précipité blanc, tandis que le $(NH_4)_2Ce(NO_3)_6$ est consommé en quelques minutes. Après agitation pendant 10 minutes, on considère la réaction comme terminée, et ensuite par filtration et séparation du solvant, on obtient 4]5 g (86 %) d'une poudre jaune/orangée.

Solubilité : soluble dans $CH_3CN$, le DME, le toluène, l'acétone, insoluble dans le n-hexane.

Spectre de RMN de $^1H$ (dans THF-$d_8$) $\delta$ : 3,31 ; 3,48 ; 7,21 ; 7,66 ; 7,75.

Spectre de RMN de $^{13}C$ (dans THF-$d_8$) $\delta$ : 58,84, 72,6 ; 128,02 ; 129,59 ; 135,33 ; 139,23.

Exemple 3

Réaction de $(NH_4)_2Ce(NO_3)_6$ avec $1Ph_2Si(OH)_2$

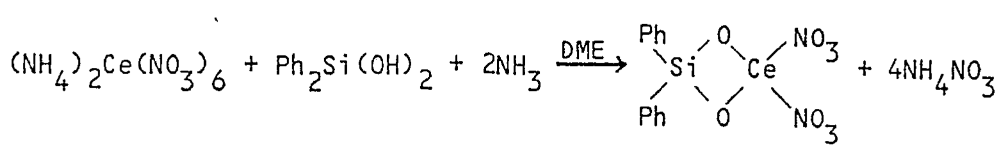

A 5 g (0,00912 mol) de $(NH_4)_2Ce(NO_3)_6$ dans 40 ml (35 g) de diméthoxyéthane, on ajoute 2 g (0,00924 mol) de $Ph_2Si(OH)_2$ sous forme solide en suivant le même mode opératoire qu'à l'exemple 2. La réaction est terminée après 10 minutes.
Rendement : 3,5 g (85,2%) d'une poudre orangée.
Solubilité : soluble dans $CH_3CN$, l'acétone, le DME pour former des solutions troubles ; insoluble dans l'hexane et le toluène.

Les résultats des spectres de RMN de $^{1}H$ et de $^{13}C$ sont identiques à ceux de l'exemple 2.

Exemple 4

Préparation du tétra(triéthylsilyloxyde) de cérium (IV)

$$(NH_4)_2Ce(NO_3)_6 + 4\ Et_3SiOH + 4NH_3 \xrightarrow{DME} Ce(OSiEt_3)_4 + 6NH_4NO_3$$

A une suspension agitée de 10,36 g (0,0189 mol) de $(NH_4)_2Ce(NO_3)_6$ dans 50 ml (43 g) de diméthoxyéthane, on ajoute au moyen d'une seringue 10 g (0,0751 mol) de triéthylsilanol. Pendant les 10 minutes suivantes, on fait barboter lentement du gaz $NH_3$ dans la solution jaune/orangé, ce qui provoque la formation immédiate d'un précipité blanc. Après agitation pendant 30 minutes, on filtre le mélange sur un verre fritté, et on évapore à siccité le filtrat jaune/vert obtenu. Cependant, il n'est pas possible de transformer l'huile jaune épaisse obtenue en une poudre après plusieurs traitement sous vide.
Rendement en $(NH_4)NO_3$ récupéré : 8,7 g (théorie d'après l'équation de réaction ci-dessus : 9 g).
Spectres de RMN : $^{1}H$ ($C_6H_6$-$d_6$) $\delta$ : 0,62 (t) ; 1,00 (q)
$^{13}C$ ($C_6H_6$-$d_6$) $\delta$ : 6,94 ; 7,12
$^{29}Si$ ($C_6H_6$-$d_6$) $\delta$ : 15,14

Exemple 5

Préparation du bis(1,1-diphénylsilyloxyde) de cérium (IV)

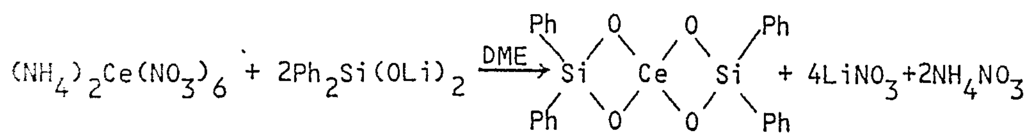


A une suspension agitée de 3,4 g (0,02179 mol) de diphénylsilanediolate de dilithium dans 30 ml (26 g) de DME. on ajoute 5,97 g (0,0108 mol) de $(NH_4)_2Ce(NO_3)_6$ sous forme solide. Après agitation pendant deux heures, il s'est formé un précipité blanc et une solution brun/rouge foncé. Il ne reste pas de $(NH_4)_2Ce(NO_3)_6$ n'ayant pas réagi. L'évaporation subséquente du solvant provoque la formation d'une huile épaisse rouge foncé. Après conservation de l'huile pendant 10 heures sous le vide de la pompe à huile, il est possible de la transformer en une poudre orangée humide, collante.
Spectres de RMN :
$^{1}H$ ($CHCl_3$-d) $\delta$ : 3,34 ; 3,51 ; 7,22 ; 7,30 ; 7,37 ; 7,52.
$^{13}C$ ($CHCl_3$-d) $\delta$ : 59,39 ; 71,74 ; 127,71 ; 130,04 ; 134,26.

Exemple 6

Préparation du tétra(triméthylsilyloxyde) de cérium (IV)

$$(NH_4)_2Ce(NO_3)_6 + 6KOSiMe_3 \xrightarrow{THF} Ce(OsiMe_3)_4 + 2NH_3 + 2Me_3SiOH + 4KNO_3$$

On charge ensemble 10,68 g (0,01948 mol) de $(NH_4)_2Ce(NO_3)_6$ et 15 g (0,1169 mol) de triméthylsilanolate de potassium dans un ballon de 200 ml. Après addition de 40 ml de tétrahydrofuranne, on agite le mélange pendant 8 heures, après quoi il s'est formé un précipité jaune verdâtre. Par filtration sur un verre fritté, on obtient 45 ml d'un mélange solvant incolore limpide (THF + $Me_3SiOH$) et 16,5 g (théorie : 17,5 g) d'une poudre jaune verdâtre [$Ce(OsiMe_3)_4$ + $NH_4NO_3$]. On lave la poudre par 250 ml d'eau distillée à l'air, pour donner 4,2 g

(≅ 43%) d'une poudre jaune clair.

Le produit est une poudre fine, insoluble dans les solvants organiques, assez stables à l'air. Il ne semble pas être attaqué par $H_2O$.

Exemple 7

Préparation tétra(triméthylsilyloxyde) de cérium (IV)

$(NH_4)_2Ce(NO_3)_6 + 6MeSiOH + 4NH_3 \rightarrow Ce(OSiMe_3)_4 + 6NH_4NO_3 + 2Me_3SiOH$

On met en suspension 10,2 g (0,0186 mol) de nitrate cérique d'ammonium dans 20 ml (17 g) de DME et on agite pendant 10 minutes. On ajoute à l'aide d'une seringue 12,3 ml (≅ 10,05 g ≅ 0,116 mol) de triméthylsilanol. Comme le $Me_3SiOH$ n'est pas soluble dans la suspension rouge du complexe de cérium, il n'est formé deux couches. On fait barboter du gaz $NH_3$ dans la solution en agitant vigoureusement, ce qui s'accompagne de la formation d'un précipité jaune brillant qui vire au jaune pâle par réaction ultérieure avec le gaz $NH_3$. Dans les quinze premières minutes, la réaction est très exothermique ; cependant, après une demi-heure, la température de réaction diminue. On ajoute 40 ml d'éther éthylique pour maintenir l'agitation.

Ensuite, on filtre le produit et on le lave par 3 x 40 ml d'éther. Après séchage sous le vide de la pompe à huile, on obtient 12,1 g d'une poudre jaune pâle. Le mélange produit contenant $NH_4NO_3$ est lavé avec 200 ml de $H_2O$. On sèche le solide restant sous vide et on obtient 5,4 g (58,5 %) d'une poudre jaune clair.

Le produit n'est soluble dans aucun des solvants habituels.

Exemple 8

Préparation du tétra(triphénylsilyloxyde) de cérium (IV)

$(NH_4)_2Ce(NO_3)_6 + 6Ph_3SiONa \xrightarrow{DME} Ce(OSiPh_3)_4 + 6NaNO_3 + 2NH_3 + 2Ph_3SiOH$

On dissout 3,9 g (0,013 mol) de triphénylsilanolate de sodium dans 30 ml (26 g) de DME. On ajoute goutte à goutte cette solution dans la solution limpide rouge de 1,19 g (0,00217 mol) de $(NH_4)_2Ce(NO_3)_6$ dans 15 ml (13 g) de DME. Il se forme immédiatement un précipité blanc jaunâtre, en même temps qu'un dégagement de gaz $NH_3$, indiqué par le papier pH. Après agitation du mélange pendant une nuit, on évapore le solvant à 40° C pour donner 4,94 g (théorie 5,0 g) d'une poudre jaune clair. On lave le produit brut par deux portions de 30 ml chacune d'isopropanol pour séparer $Ph_3SiOH$. On extrait le résidu restant par 45 ml de benzène pour donner un filtrat jaune limpide. Après élimination du solvant sous vide, on obtient 2,6 g (96%) d'une poudre blanche. Solubilité : soluble dans $CHCl_3$, le DME, le THF, $C_6H_6$.

Les spectres de RMN de $^1H$ et de $^{13}C$ sont identiques à ceux de l'exemple 1.

Exemple 9

Préparation du tétra(triéthylsilyloxyde) de cérium (IV)

$(NH_4)_2Ce(NO_3)_6 + 6Et_3SiONa \xrightarrow{DME} 2Et_3SiOH + Ce(OSiEt_3)_4 + 6NaNO_3 + 2NH_3$

On prépare 3,37 g (0,02173 mol) de triéthylsilanolate de sodium en faisant réagir 0,5 g de Na avec 2,87 g de $Et_3SiOH$ dans 30 ml (26 g) de DME pendant 12 heures. A la solution incolore limpide, on ajoute 1,98 g (0,0036 mol) de $(NH_4)_2Ce(NO_3)_6$ dans 20 ml (17 g) de DME. Il se forme immédiatement un précipité blanc, en même temps qu'un dégagement de gaz $NH_3$. Après une durée de réaction d'environ 1 heure, tout le $(NH_4)_2Ce(NO_3)_6$ a réagi. Après filtration, on évapore à siccité le filtrat jaune pour donner un produit huileux jaune.

Les spectres de RMN de $^1H$ et de $^{13}C$ sont identiques à ceux de l'exemple 4.

Exemple 10

Préparation du bis(1,1-diphénylsilyloxyde) de cérium (IV)

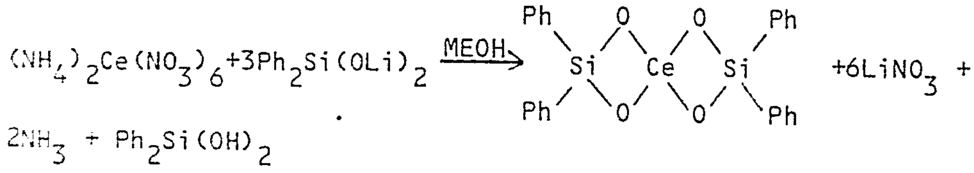


A une solution jaune clair limpide de 1,92 g (0,0084 mol) de $Ph_2Si(OLi)_2$ dans 30 ml (24 g) de méthanol, on ajoute goutte à goutte une solution rouge limpide de 1,53 g de $(NH_4)_2Ce(NO_3)_6$ dans 10 ml de MeOH. Il se forme immédiatement un précipité jaune pâle en même temps qu'un dégagement de gaz $NH_3$, indiqué par le papier pH. Après agitation pendant 3 heures, on filtre le mélange de réaction sur un verre fritté Schlenk ; ensuite, l'évaporation du filtrat jaune pâle à siccité donne une poudre jaune pâle.

Les spectres de RMN de $^{1}H$ et de $^{13}C$ sont identiques à ceux de l'exemple 2, sauf que le produit obtenu dans le méthanol comme solvant contient deux molécules de MeOH liées par coordination.

Exemple 11

Préparation du diisopropoxy-1,1-diphénylsilanediolate de cérium (IV

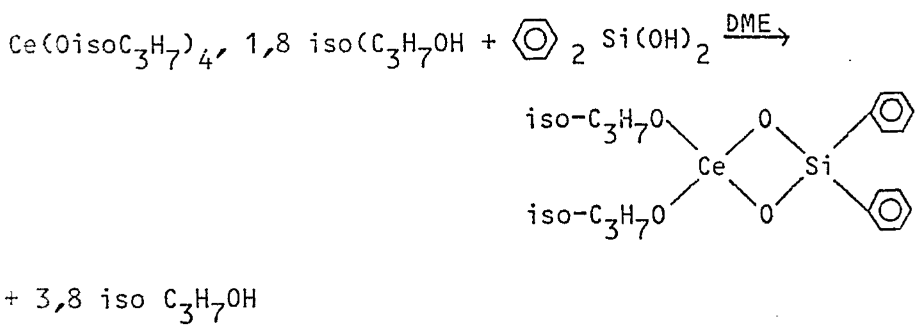


A une solution jaune limpide de 6 g (0,01238 mol) de $Ce(OisoC_3H_7)_4$ . 1,8 $isoC_3H_7OH$ dans 30 ml (26 g) de DME, on ajoute 2,67 g (0,01238 mol) de $Ph_2Si(OH)_2$ (diphénylsilanediol) sous forme solide. Après agitation pendant quelques minutes, il s'est formé une suspension épaisse ; par addition d'environ 10 ml de DME, on obtient une solution limpide que l'on agite pendant 3 heures. On sépare le solvant en chauffant doucement (environ 40° C) sous le vide de la pompe à huile. Le solide mousse avant séchage complet, mais peut être facilement transformé en une poudre en utilisant une spatule.

Rendement : 5 g (85,5%) d'une poudre jaune, légèrement sensible à l'air.

Solubilité : très soluble dans $CHCl_3$, l'éther, le DME ; soluble dans $C_6H_6$ ; insoluble dans $CH_3CN$.

F. 95-100° C.

Spectres de RMN :

$^{1}H$ ($CHCl_3$-d) $\delta$ : 1,26 ; 1,33 ; 5,1 ; 7,26 ; 7,72.

$^{13}C$ ($CHCl_3$-d) $\delta$ : 27,75 ; 127,27 ; 128 ; 129 ; 134,85.

Analyses élémentaires :

calculé pour $C_{18}H_{24}O_4SiCe$ 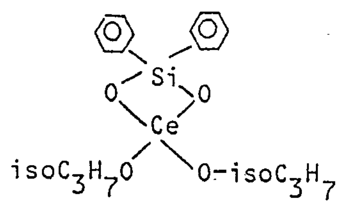 472,205

| C | H | Si | Ce |
|---|---|---|---|
| 45,74 (39,20) ; | 5,08 (4,93) ; | 5,94 (6,04) ; | 29,64 (30,60) |

valeurs trouvées entre parenthèses.

Le rendement de 85,5 % a été rapporté au poids moléculaire de 472,205.

Exemple 12

Préparation du bis(isopropylate)-bis(triméthylsilyloxyde) de cérium (IV)

$Ce(O\text{-}isoC_3H_7)_4$ . 1,8 $isoC_3H_7OH$ + $2(CH_3)_3SiOH \rightarrow (isoC_3H_7O)_2Ce(OSi(CH_3)_3)_2$ + 3,8 $isoC_3H_7OH$

On dissout 10,2 g (0,021 mol) d'isopropylate cérique dans 20 ml (17 g) de DME. On ajoute au moyen d'une seringue à la solution agitée 4,65 ml (≅ 3,79 g ≅ 0,042 mol) de triméthylsilanol. Toutes les 30 minutes, la solution rouge devient trouble et il se forme progressivement un précipité fin. On laisse réagir le mélange pendant les 4 heures suivantes. Ensuite, par filtration sur un verre fritté Schlenk et séchage sous le vide de la pompe à huile, on obtient 3,1 g (33,8 %) d'une poudre jaune pâle.
Spectres de RMN :
$^1H$ ($C_6H_6$-$d_6$) δ : 0,3356 ; 1,34 ; 1,41 ; 4,30.
$^{13}C$ ($C_6H_6$-$d_6$) δ : 3,73 ; 26,37 ; 71,98.

Exemple 13

Préparation du tétraméthyldisiloxanediolate-di-isopropylate de cérium (IV)

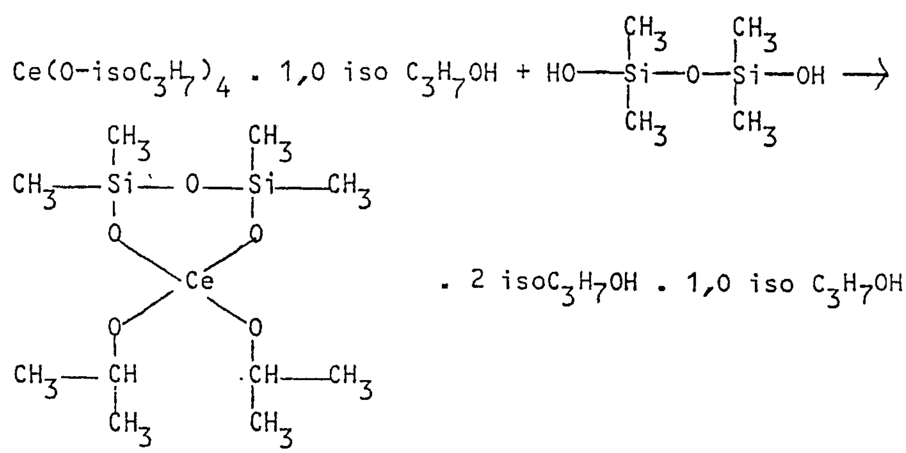


On dissout 13,74 g (0,0314 mol) d'isopropylate cérique ete 5,25 g (0,0314 mol) de tétraméthyldisiloxannediol

chaque fois dans 10 ml de DME. Par addition du composé de si à la solution du complexe de Ce, il se forme immédiatement un précipité jaune qui passe partiellement en solution. Cependant, par filtration rapide et séchage sous vide, il est possible de récupérer environ 100 mg de précipité jaune.

Spectre de RMN :

$^{1}H$ ($CHCl_3$-d) δ : 0,0197 ; 1,26 ; 4,71.

$^{13}C$ ($CHCl_3$-d) δ : 0,9941 ; 27,05 ; 71,80.

Après la filtration, on obtient un filtrat rouge limpide qui, par séparation du solvant, donne une huile épaisse. Il n'est pas possible de la transformer en une poudre par un nouveau séchage. Ses spectres de RMN sont presque identiques à ceux du précipité jaune mentionné ci-dessus.

Les hydrocarbylsilyloxydes de cérium peut être utilisés dans la fabrication de poudres d'oxydes contenant du cérium et du silicium, utiles dans la préparation de céramiques capables de performances élevées, de gels durs et de films contenant du cérium et du silicium ; de fibres optiques contenant des polymères ou oxydes de cérium et de silicium, d'additifs pour biocides, d'additifs pour revêtements de silicones comme les peintures, le traitement de textiles et d'autres matières cellulosiques. Ils peuvent également être utilisés dans divers applications catalytiques, par exemple pour vulcaniser le caoutchouc de silicone et comme catalyseurs dans la fabrication de polyuréthannes. Le tableau ci-dessous illustre les capacités de certains des nouveaux composés dans un test classique démontrant et comparant les activités catalytiques.

| Composés essayés | Concentration, ppm | Temps de solidification, minutes |
|---|---|---|
| Acétylacétonate de nickel (témoin) | 314 | 115 |
| $Ce(O_2SiPh_2)_2$ | 260 | 105 |
| $(PrO)_2Ce(O_2SiPh_2)$ | 320 | 105 |
| $(PrO)_2Ce(OSiMe_3)_2$ | 372 | 45 |
| $Ce(OSiEt_3)_4$ | 233 | 80 |
| $Ce(OSiMe_3)_4$ | 282 | 69 |

Les réactions ont été effectuées avec un polyoxypropylènetriol (NIAX Triol LG-56 de la Société Union Carbide) et le toluènediisocyanate dans un mode opératoire décrit dans Journal of Applied Polymer Science, vol. IV, n° 1, p. 207-211, (1960).

Certains des nouveaux produits ont une résistance surprenante à l'hydrolyse, tandis que d'autres s'hydrolysent très lentement. Il est donc possible de former un silyloxyde ayant une vitesse d'hydrolyse désirée quelconque, suivant l'application.

En outre, la présence de silicium et de cérium en même temps dans la même molécule est avantageuse lorsque les deux sont nécessaires, par rapport à l'addition séparée d'alkylates de cérium et de silicium.

Le terme "hydrocarbylsilyloxyde cérique" utilisé dans la présente description et dans les revendications annexées désigne n'importe quel composé contenant du cérium lié par l'intermédiaire de l'oxygène au silicium d'un groupe silyloxyde et comprend spécifiquement aussi de tels composés contenant en outre des groupes nitrates et/ou des groupes hydrocarbyloxydes liés au cérium.

**Revendications**

1. Hydrocarbylsilyloxyde cérique, caractérisé par au moins un groupe ayant un atome de cérium tétravalent lié par l'oxygène à 1, 2, 3 ou 4 atomes de silicium, les valences restantes du silicium étant liées à des groupes hydrocarbonés ayant de 1 à environ 20 atomes de carbone.

2. Hydrocarbylsilyloxyde cérique selon la revendication 1, caractérisé en ce qu'il contient un atome de silicium dans un seul groupe silyloxyde.

3. Hydrocarbylsilyloxyde cérique selon la revendication 2, caractérisé en ce qu'il contient un atome de silicium dans un seul groupe silyloxyde relié par 2 atomes d'oxygène à un atome de cérium.

4. Hydrocarbylsilyloxyde cérique selon la revendication 1, caractérisé en ce qu'il contient 2 atomes de silicium dans deux groupes silyloxydes reliés par l'oxygène à un atome de cérium.

5. Hydrocarbylsilyloxyde cérique selon la revendication 1, caractérisé en ce qu'il contient 3 atomes de silicium dans trois groupes silyloxydes reliés par l'oxygène à un atome de cérium.

6. Hydrocarbylsilyloxyde cérique selon la revendication 1, caractérisé en ce qu'il contient 4 atomes de silicium dans quatre groupes silyloxydes reliés par l'oxygène à un atome de cérium.

7. Hydrocarbylsilyloxyde cérique selon la revendication 1, caractérisé en ce qu'il répond à la formule générale (I) :

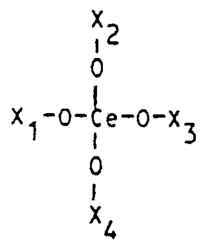

(I)

dans laquelle $OX_1$, $OX_2$, $OX_3$ et $OX_4$ identiques ou différents sont choisis parmi

a) $-O-NO_2$,

b) $-O-R_1$ où $R_1$ est un groupe hydrocarboné ayant de 1 à environ 20 atomes de carbone,

c) $-[O]_{4-y}Si-R_y$ où R est H ou un radical hydrocarboné ayant de 1 à environ 20 atomes de carbone, avec la limitation qu'au plus 1 atome d'hydrogène est lié au silicium et y est un nombre entier égal à 1, 2 ou 3.

Lorsque y est supérieur à 1, les radicaux R peuvent être identiques ou différents.

Lorsque y est égal à 1 ou 2, l'atome de silicium peut être relié par l'intermédiaire de 1 ou 2 atomes d'oxygène à un même atome de cérium ou à 2 atomes de cérium différents ; de même, l'un desdits atomes d'oxygène au moins peut être lié à un autre atome de silicium qui appartient à un ature radical de type c) porté par le même atome de cérium ou par un ature atome de cérium.

d) 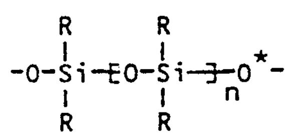

où R est un radical hydrocarboné comportant de 1 à environ 20 atomes de carbone, n est le nombre de motifs dans le polymère et est compris entre 1 et environ 1 000 et l'oxygène -O*- est lié à un atome d'hydrogène ou est lié à un atome de cérium, avec la condition complémentaire qu'au moins un des groupes $OX_1$, $OX_2$, $OX_3$ et $OX_4$ appartient à l'une des catégories c) et d).

8. Hydrocarbylsilyloxyde cérique selon la revendication 7, caractérisé en ce que $R_1$ et R sont des groupes hydrocarbonés choisis parmi les groupes alkyles et alcényles à chaîne droite ou ramifiée ; les groupes cycloalkyles, cycloalcényles ; les groupes phényles et alkylphényles ; les groupes naphtyles et alkylnaphtyles.

9. Hydrocarbylsilyloxyde cérique selon l'une des revendications 1 à 8, caractérisé en ce que $R_1$ et R sont des groupes hydrocarbonés ayant de 1 à environ 10 atomes de carbone.

10. Hydrocarbylsilyloxyde cérique selon l'une des revendications 7 à 9, caractérisé ce qu'il répond à la formule :

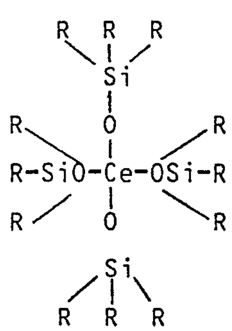

dans laquelle

R est un groupe hydrocarboné ayant de 1 à environ 10 atomes de carbone.

11. Hydrocarbylsilyloxyde cérique selon l'une des revendications 7 à 9, caractérisé en ce qu'il répond à la formule :

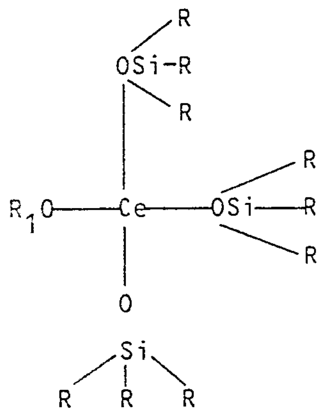

dans laquelle
$R_1$ et R sont des groupes hydrocarbonés ayant de 1 à environ 10 atomes de carbone.

12. Hydrocarbylsilyloxyde cérique selon l'une des revendications 7 à 9, caractérisé en ce qu'il répond à la formule :

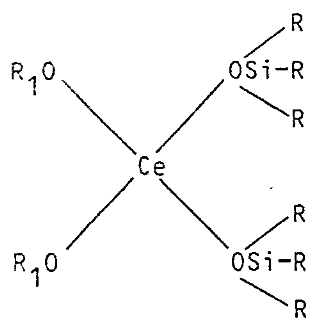

dans laquelle
$R_1$ et R sont des groupes hydrocarbonés ayant de 1 à environ 10 atomes de carbone.

13. Hydrocarbylsilyloxyde cérique selon l'une des revendications 7 à 9, caractérisé en ce qu'il répond à la formule :

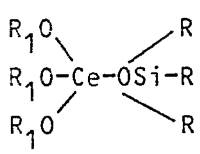

dans laquelle
$R_1$ et R sont des groupes hydrocarbonés ayant de 1 à environ 10 atomes de carbone.

14. Hydrocarbylsilyloxyde cérique selon l'une des revendications 7 à 9, caractérisé en ce qu'il répond à la formule :

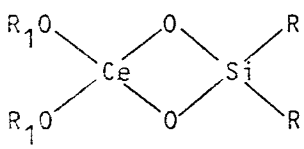

dans laquelle
$R_1$ et R sont des groupes hydrocarbonés ayant de 1 à environ 10 atomes de carbone.

15. Hydrocarbylsilyloxyde cérique selon l'une des revendications 7 à 9, caractérisé en ce qu'il répond à la formule :

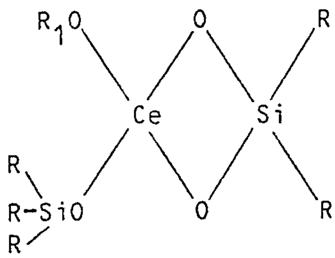

dans laquelle

$R_1$ et R sont des groupes hydrocarbonés ayant de 1 à environ 10 atomes de carbone.

16. Hydrocarbylsilyloxyde cérique selon l'une des revendications 7 à 9, caractérisé en ce qu'il répond à la formule :

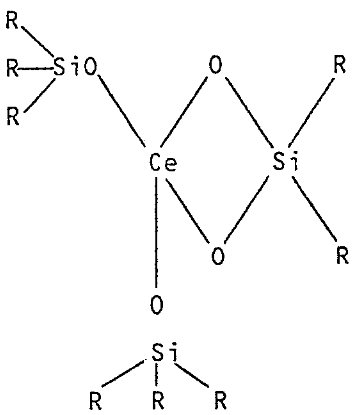

dans laquelle

R est un groupe hydrocarboné ayant de 1 à environ 10 atomes de carbone.

17. Hydrocarbylsilyloxyde cérique selon l'une des revendications 7 à 9, caractérisé en ce qu'il répond à la formule :

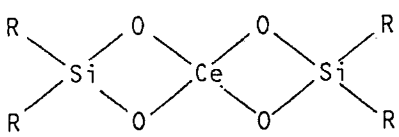

dans laquelle

R est un groupe hydrocarboné ayant de 1 à environ 10 atomes de carbone.

18. Hydrocarbylsilyloxyde cérique selon l'une des revendications 7 à 9, caractérisé en ce qu'il comprend le motif d'une structure polymérique suivant :

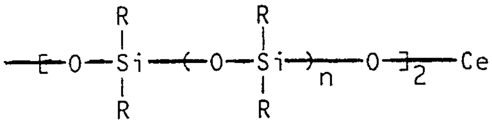

dans laquelle

R est un groupe hydrocarboné ayant de 1 à environ 10 atomes de carbone et les restes R fixés à un atome de silicium quelconque peuvent être identiques ou différents ; et
n est le nombre de motifs d'un polymère et est compris entre 0 et 1000.

19. Hydrocarbylsilyloxyde cérique selon l'une des revendications 7 à 18, caractérisé en ce que $R_1$ et R sont choisis parmi les groupes alkyles linéaires ou ramifiés ayant de 1 à 6 atomes de carbone, le groupe vinyle, le groupe cyclohexyle et le groupe phényle.

20. Procédé de préparation d'un hydrocarbylsilyloxyde cérique décrit dans l'une des revendications 1 à 19, caractérisé en ce que l'on fait réagir le nitrate cérique d'ammonium avec un hydrocarbylsilanol en conditions anhydres, en présence d'une base anhydre et à une température dans la gamme d'environ -30 à environ 200° C jusqu'à formation de l'hydrocarbylsilyloxyde de cérium et du nitrate de la base.

21. Procédé selon la revendication 20, caractérisé en ce que l'hydrocarbylsilanol est un silanol aliphatique inférieur dans lequel les groupes aliphatiques ont de 1 à 5 atomes de carbone.

22. Procédé selon la revendication 20, caractérisé en ce que l'hydrocarbylsilanol est un hydrocarbylsilanol supérieur ayant des groupes hydrocarbyles choisis parmi les groupes aliphatiques, cycloaliphatiques, aromatiques et alkylaromatiques ayant de 6 à 10 atomes de carbone.

23. Procédé selon la revendication 20, caractérisé en ce que le silanol répond à la formule (II) :

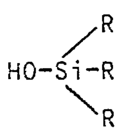

(II)

dans laquelle
R est un groupe hydrocarboné ayant de 1 à environ 10 atomes de carbone.

24. Procédé selon la revendication 20, caractérisé en ce que le silanol répond à la formule (III) :

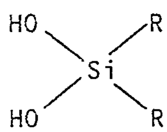

(III)

dans laquelle
R est un groupe hydrocarboné ayant de 1 à environ 10 atomes de carbone.

25. Procédé selon la revendicartion 20,caractérisé en ce que le l'hydrocarbylsilanol répond à la formule (IV)

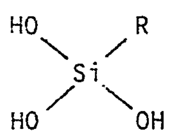

(IV)

dans laquelle R est un groupe hydrocarboné ayant de 1 à environ 10 atomes de carbone.

26. Procédé selon la revendication 20,caractérisé en ce que le silanol répond à la formule (V)

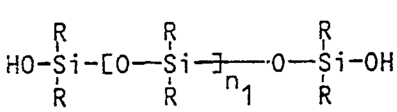

(V)

dans laquelle
R est un groupe hydrocarboné ayant de 1 à environ 10 atomes de carbone, et
$n_1$ est le nombre de ces motifs dans le polymère et est compris entre 1 et environ 1 000.

27. Procédé selon la revendication 26 caractérisé en ce que le silanol est une résine silicone solide contenant des groupes OH libres.

28. Procédé selon la revendication 20 caractérisé en ce qu'il est mis en oeuvre en solution dans un

solvant inerte.

29. Procédé selon la revendication 28 caractérisé en ce qu'il est mis en oeuvre en présence d'un alcool.

30. Procédé selon la revendication 29 caractérisé en ce que l'alcool est un alcanol ayant de 1 à environ 10 atomes de carbone.

31. Procédé selon la revendication 20 caractérisé en ce que la quantité de silanol est inférieure à la quantité stoechiométrique pour former le silyloxyde.

32. Procédé selonla revendication 20 caractérisé en ce que la quantité de silanol est au moins égale à la quantité stoechiométrique pour former le silyloxyde.

33. Procédé selon la revendication 20, caractérisé en ce que la base anhydre est un silyloxyde de métal alcalin correspondant au silanol du silyloxyde de cérium.

34. Procédé selon la revendication 20, caractérisé en ce qu'il est mis en oeuvre à une température de réaction comprise entre la température ambiante et environ 50° C.

35. Procédé selon la revendicartion 10, caractérisé en ce que le silyloxyde de cérium produit dans la réaction est récupéré et séparé du nitrate par extraction dans un solvant qui dissout le silyloxyde ou le nitrate.